# EUROPEAN PATENT SPECIFICATION

(11) **EP 3 943 281 B1**
(45) Date of publication and mention of the grant of the patent: **07.06.2023**
(21) Application number: 20382664.9
(22) Date of filing: 24.07.2020
(51) Int. Cl.: B29C 70/88, B29C 70/86

(54) **METHOD FOR MANUFACTURING POLYMER COMPOSITES WITH EMBEDDED FUNCTIONALITIES**
VERFAHREN ZUR HERSTELLUNG VON POLYMERVERBUNDSTOFFEN MIT EINGEBETTETEN FUNKTIONALITÄTEN
PROCÉDÉ DE FABRICATION DE COMPOSITES POLYMÈRES À FONCTIONNALITÉS INTÉGRÉES

(43) Date of publication of application: 26.01.2022
(73) Proprietor: FUNDACION TECNALIA RESEARCH & INNOVATION, 20009 San Sebastián, Gipúzcoa (ES)
(72) Inventor: Bustero Martinez de Zuazo, Izaskun, 20009 Donostia - Guipúzcoa (ES); Vaquero Moralejo, Celina, 20009 Donostia - Guipúzcoa (ES); Bilbao Alba, Leire, 20009 Donostia - Guipúzcoa (ES); Maudes Puentedura, Jon, 20009 Donostia - Guipúzcoa (ES); Ollo Escudero, Olatz, 20009 Donostia - Guipúzcoa (ES); Obieta Vilallonga, Isabel, 20009 Donostia - Guipúzcoa (ES)
(74) Representative: Balder IP Law, S.L.

(56) References cited:
- CA-A1- 2 220 246
- CA-C- 2 220 246
- US-A- 4 442 139
- US-A1- 2014 262 047

## Description

### TECHNICAL FIELD

The present invention relates to the field of composite parts, in particular polymer composites (composites whose matrix is made of polymeric resin). The polymeric resin is reinforced with fiber fabrics, such as glass, aramid, natural or carbon fiber fabrics. In particular, the invention relates to methods for obtaining multifunctional polymer composites or composite parts, having printed embedded functionalities. The present invention can for example be applied in the transport and energy sectors (automotive, railway, aeronautics, solar or wind power).

### STATE OF THE ART

Multifunctional composites are materials with classic properties, such as high strength and stiffness, which in addition demonstrate some other functionalities, such as sensing, actuating, energy harvesting, self-annealing, health monitoring and morphing structure. Using multifunctional composites can offer significant savings in weight and volume of the final product or system in which it is integrated, e.g. aircraft and spacecraft, by eliminating bulky cables and chassis. Multifunctional composites can also contribute to prevent potential catastrophic failure and loss of life of a part by adding sensing capabilities capable of foreseeing possible failures of primary structures.

In many fields of technology, and due to different reasons, electronics and related products are usually integrated into different substrates. Exemplary reasons for such integration may be volume and/or weight savings and efficient integration of components. Exemplary fields of technology aiming at integrating electronics on different substrates are transport industry, including automotive, railway and aeronautics industry, product packaging, product housings, personal electronic devices, wearable electronics, displays, toys and electrical household appliances.

There exist different techniques for providing functionalities -such as electronic components, integrated circuits and conductors- onto a substrate element. Functional Printing or Printed electronics is the use of electrically active materials printed on different substrates, to perform tasks combining mechanical and electrical/electronic functionalities, including integrated elements like sensors, lighting or photovoltaics. Printed electronics covers screen printing, flexography and inkjet printing, among others, through an additive printing process. Functional printing activities are typically performed on a planar (2D) substrate, either flexible or not. Examples of substrates typically used are PET, PC, textiles and paper.

The design of multifunctional materials and structures can be implemented through the integration within a structural material of functional devices (i.e. devices which exhibit an additional function). Much research has been reported on functional parts, such as solar cells, thin-film batteries and copper foils, embedded into composite structures. Functional parts can be embedded during the laminating process and co-cured with fiber laminates. Other components, such as optical fibers and copper wires, can be introduced into dry fiber preforms during weaving of the dry fiber, to serve as sensors and antennas. These and other conventional methods are for example reviewed by Jagath Narayana et al in Materials Today: Proceedings 5 (2018) 5580-5590.

Currently, composite parts may have functionalities or structures which have been embedded therein during the fabrication process of the composite part. For example, a current automotive acceleration sensor was integrated in fiber-reinforced polymer parts in order to lightweight body parts (Klein Linda, Sensor Systems for FRP Lightweight Structures: Automotive Features Based on Serial Sensor Products, Sensors (2019), 19, 3088). Humidity sensors to detect moisture were embedded in composites, as moisture affects the operation and durability of laminate parts (Ebert F. et al. Integration of humidity sensors into fibre-reinforced thermoplastic composites, Procedia Technology 2 (2016) 207-213). Piezoelectric sensors and printed circuits have been embedded in composite laminated structures for structural health monitoring (Yang S.M. et al. Design and fabrication of a smart layer module in composite laminated structures, Smart Mater. Struct. 14 (2005) 315-320; Lin M. et al, The manufacture of composite structures with a built-in network of piezoceramics, Composites Science and Technology 62 (2002) 919-939).

In all cases mentioned above, the structural integrity, especially the interlaminar shear strength, is largely undermined and can result in delamination of the structures. Also, the embedded objects can act as blockers during the resin infiltration process, which will generate dry spots. The addition of the desired functions, such as sensors and printed circuits, within the composite structure cannot be at the cost of sacrificing the mechanical integrity, especially its interlaminar shear strength (ILSS). This is of especial relevance in certain sectors, such as the aeronautics sector. Therefore, the ultimate goal of multifunctional composites is to affordably and efficiently create multiple sophisticated and intelligent functionalities that become an inherent part of the structure in which they are integrated, without behaving as parasitic, so that their impact on the mechanical integrity of the composite structure is virtually eliminated.

An attempt to integrate functionalities within a composite structure is for example disclosed in US8932905B1, which refers to printing an organic semiconductor circuit on the surface of a composite structure. Another attempt is for example disclosed in US2017/0150602A1, wherein a flat polymer substrate having a circuit formed thereon is integrated with another polymer through a process of additive manufacturing. However, the obtained structure suffers from delamination and other failures. Another attempt is disclosed in EP3220064A1, which refers to a method of making a composite panel, in which different components are applied on a first electrically non-conductive layer. A second electrically non-conductive layer is coupled to the first electrically non-conductive layer. However, coupling the two layers requires the application of certain temperature and pressure, which may damage the integrated components. Yet another attempt is disclosed in EP3148299A1, which refers to a textile multi-layered injection moulded article made of an outer laminated textile fabric to which a laminated foil is attached. The laminated foil has a layer on which an electric circuit is printed and an encapsulation layer. However, the laminated foil causes damage to the structure.

Pa Peter et al (High frequency characterization of conductive inks embedded within a structural composite, Smart Materials and Structures, 24 (2015) 065010), have reported the application of silver ink by means of screen printing onto a prepreg (a combination of a matrix (or resin) and fiber reinforcement). In order to reduce mechanical problems, the resin must be precured in advance. In spite of the precuring stage, displacement in the applied ink tracks has been observed US 2014/262047 discloses a method of manufacturing a polymer composite having an embedded functionality, the method comprising providing a dry non-conductive fiber fabric printing material on the dry non-conductive fiber fabric thus making a printed functionality; forming a laminate comprising the dry non-conductive fiber fabric having the printed functionality and at least one additional fabric or core and obtaining a polymer composite from said laminate.

Therefore, there is a need to obtain polymer composites having embedded functionalities which overcome the drawbacks of conventional attempts to embed functionalities on composites.

### DESCRIPTION OF THE INVENTION

The method of obtaining composites or composite parts, such as polymer composites, having embedded functionalities, and the composites or composite parts having embedded functionalities, described in the present invention, intend to solve the shortcomings of prior-art methods thereof and obtainable products. Thus, multifunctional composites are obtained. In the context of the present invention, embedded functionalities preferably refer to electronic assemblies, such as electrically conductive tracks or circuits, electrical contact paths, electrically conductive members, integrated circuits and integrated components, for example lighting components (e.g. LEDs), photovoltaics components, electric contact pads, sensors and on/off buttons. Electronic assemblies may also include dielectric protection applied on conductive paths, circuits or components.

The proposed method is based on integrating an embedded functionality (such as electrically conductive tracks or circuits, integrated circuits and/or sensors) by printing, for example screen-printing or micro-dispensing, on a flexible substrate, of which a composite or composite part is later made. The flexible substrate is a dry non-conductive fiber fabric layer.

It is a structural layer (i.e. it servers the purpose of improving the structure of the composite). In other words, the embedded functionality is integrated on the non-conductive fabric layer during a process of manufacturing a composite or composite part. The process of manufacturing the composite includes stacking the non-conductive structural fiber fabric layer having the printed functionality with one or more additional fabric layers, forming a laminate, or with a core. The non-conductive fabric layer on which an embedded functionality is printed is preferably woven. In embodiments of the invention, the non-conductive woven fabric layer on which an embedded functionality is printed is a glass-fiber fabric. Alternatively, it may be a fiber fabric layer made of a non-conductive material, such as aramid, natural fiber, polypropylene, polyester or polyamide, among others. The laminate may be formed manually (hand layup) or automatically (ATL, etc.). The layers forming the laminate may comprise different fabrics. They may comprise glass-fiber fabric layers, a combination of glass-fiber fabric layers and carbon-fiber fabric layers, or any other combination of fabrics, such as glass, carbon, natural and/or aramid woven fabric layers. These laminates can be a monolithic part or part of a sandwich composite (foam core, honeycomb core, etc.). For completing the composite, a thermoset composite matrix may be introduced following conventional techniques, such as using prepreg, using a resin film or by infiltration of liquid resins based on different methods (Resin Transfer Moulding, infusion, hand lay-up, filament winding, etc.). Alternatively, a thermoplastic composite matrix may be introduced following a process of in-situ polymerization. By printing the functionality on the flexible woven fabric substrate, with which the composite or composite part is subsequently manufactured, the functionality becomes fully integrated/embedded within the composite, in a minimally invasive way. The structure and final composite is therefore not damaged.

The embedded functionality may include not only printed elements/circuits, but also hybrid components, such as LEDs or connectors, non-printed on the glass-fiber fabric layer. Rather, such non-printed components are coupled, attached, bonded or connected on the flexible substrate. Only elements which, due to their nature and development technique, cannot be printed through screen-printing or micro-dispensing, are attached to the flexible substrate by other -more invasive- means. Examples of these elements are LEDs or connectors. By minimizing the amount of such elements, which typically occupy a minimum surface not exceeding a few square centimeters, the integrity of the structure and final composite is maximized.

An optimized process of printing different elements (conductive tracks, buttons and sensors, among others) on a variety of non-conductive fabrics using different techniques, such as screen-printing or micro-dispensing, is disclosed. For printing these elements, different types of fluids are required. For example, conductive or semi-conductive pastes (such as metal-based pastes, carbon-based pastes and polymeric pastes), dielectric pastes and adhesive may be used.

Non-conductive fiber fabrics, such as glass-fiber fabrics, preferably woven, with nominal weights in the range of 25 - 600 g/m² (grams per square meter) have been printed with conductive pastes, dielectric pastes and/or adhesive by screen-printing and/or microdispensing. Once the printed conductive tracks and/or other elements, such as sensors (for example, capacitive touch sensors or piezo-resistive sensors) have been applied to the fabric, other components are positioned and bonded. For example, connectors and/or other rigid components are positioned and bonded. Pick&place heads can be used to position non-printed devices, such as LEDs (by means of techniques such as SMD, etc.) or connectors (for example flexible flat cables (FFC) connectors or clincher connectors). Different techniques may be used for bonding and/or connecting non-printed components. Non-limiting examples of these techniques use isotropic conductive adhesive pastes and anisotropic conductive film adhesives.

For example, in order to print an electronic assembly comprising a lighting device with an on/off button based on a capacitive sensor, in a composite part, the following steps will be carried out. First, a prototype must be designed, including designing an electrical circuit drawn for example in CAD. Then, the electrical paths and a capacitive button must be printed with a conductive paste on a non-conductive fiber fabric, such as a glass-fiber fabric. Sensors can also be printed on the fiber fabric, using either a carbon-based paste or a polymer-based paste. The conductive paste must be then cured, usually by a thermal process or a UV process. Components, such as LEDs and connector, can be placed, for example bonded by a conductive adhesive ink.

In order to embed the functional layer, and thus obtain the composite part (monolithic composite part or sandwich composite part), different composite manufacturing processes may be used, depending on the thermoset/thermoplastic of interest for specific applications. Among possible lamination processes, the following automatic and manual processes may be used: ATL (Automated Tape Layer), AFP (Automatic Fiber Placement), Hand-layup, etc. Among possible processes to infiltrate a resin, the following processes may be used: In-situ polymerization of thermoplastic monomers to obtain for example polyamide (PA) composites (directly polymerizing in a 3D mould or obtaining the composite in planar moulds followed by thermoforming at high pressures); preimpregnated fibre (prepreg) processes, in which a fiber fabric is already impregnated with phenolic or epoxy resins; vacuum infusion or RTM (resin transfer moulding) processes with epoxy, phenolic or other thermoset resins.

While the printing process is applied to the 2D dry non-conductive fiber fabric, 3D parts may be obtained, for example using moulds having certain curvature.

In summary, the proposed method allows obtaining monolithic or sandwich composite parts, including 3D parts, incorporating functionalities, like sensing or cabling, embedded in the composite part.

The method of the present invention finds special advantages in the transport industrial sector, including automotive, railway and aerospace sector, because in these sectors it is definitely desirable to manufacture composite parts having electric structures embedded thereon, while performing the integration of the electric structure during the process of manufacture of the composite part.

A first aspect of the invention relates to a method of manufacturing a polymer composite having an embedded functionality, the method comprising: providing a dry non-conductive fiber fabric having a nominal weight from 25 - 600 g/m²; selecting a paste having viscosity below 600 Pa-s, the paste being a conductive paste, a dielectric paste and/or a sensing paste; applying the selected paste on the dry non-conductive fiber fabric by means of either screen-printing or micro-dispensing, thus making a printed functionality; forming a laminate comprising the dry non-conductive fiber fabric having the printed functionality and at least one additional fabric or a core; obtaining a polymer composite from said laminate.

In the context of the present invention, the viscosity of a printing paste refers, unless otherwise indicated, to a viscosity value measured with a rheometer at a temperature of 25°C and 1/s shear rate.

In embodiments of the invention, the dry non-conductive fiber layer is made of fiber yarns, each fiber yarn comprising between 50 and 1650 filaments, the diameter each filament being between 4 and 24 µm.

In embodiments of the invention, the dry non-conductive fiber fabric is woven.

In embodiments of the invention, the dry non-conductive fiber fabric is woven defining a plain weave pattern and has a nominal weight below 200 g/m².

In embodiments of the invention, the dry non-conductive fiber fabric is woven defining a satin or twill weave pattern and has a nominal weight above 200 g/m². The viscosity of the paste may be below 100 Pa-s.

In embodiments of the invention, the paste is a conductive paste comprising: metallic particles, a binder and an organic solvent; the amount of metallic particles being between 60 to 85 wt%, the metallic particles having an average size between 400 nm to 2 µm.

In embodiments of the invention, the paste is a sensing paste, the sensing paste being one of the following: a carbon-based paste, a polymeric paste having a conductive polymer or a magnetite-based paste. When a carbon-based paste is selected, a dielectric paste is preferably printed on the carbon-based paste.

In embodiments of the invention, the method further comprises, after applying the selected paste on the dry non-conductive fiber fabric, curing the printed functionality following a thermal or UV process.

In embodiments of the invention, the method further comprises attaching at least one electronic component on the dry non-conductive fiber fabric.

In embodiments of the invention, the dry non-conductive fiber fabric is a glass-fiber fabric.

In embodiments of the invention, the laminate is a stack of dry fiber fabrics comprising the printed dry non-conductive fiber fabric.

In embodiments of the invention, the stage of obtaining a polymer composite from said laminate is done following an in-situ polymerization process or an infiltration process.

In embodiments of the invention, the laminate is a stack formed by the printed dry non-conductive fiber fabric plus at least one prepreg, wherein the stage of obtaining a polymer composite from said laminate is done by applying vacuum to the stack and curing.

The proposed method can work with a great variety of pastes, which enables to obtain a great variety of electronic assemblies on a great variety of geometries.

With respect to conventional methods for integrating functionalities in composite parts, in which the integration of functionalities causes damage and delamination to the composite part, the proposed method overcomes these drawbacks by printing on a dry fabric (non-conductive fiber fabric), which can subsequently be stacked with other fabric layers or core, and form a composite following different techniques.

The proposed method and obtainable composite parts can for example be applied in the transport and energy sectors (automotive, railway, aeronautics, solar or wind power) by embedding functionalities, such as sensors, lighting and heating elements, in the composite parts without modifying the manufacturing process and without introducing delamination or other defects in the part.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 schematically shows a stack of fiber fabrics for manufacturing a fiber reinforced composite, according to an embodiment of the invention.
Figure 2 shows an example of different pastes printed on a dry non-conductive woven fiber fabric, according to the invention.
Figure 3 shows a thermoplastic polyamide composite part manufactured following the method of the invention.
Figure 4 shows a glass-fiber fabric on which an electronic assembly has been printed following the method of the invention.
Figures 5A and 5B show two epoxy resins composite parts manufactured using the glass-fiber fabric of Figure 4.
Figure 6 shows a preimpregnated phenolic composite part having embedded conductive paths, manufactured following the method of the invention.
Figure 7 shows a hybrid aramid/carbon fiber composite having embedded conductive paths, manufactured following the method of the invention
Figure 8 shows a glass-fiber fabric on which temperature sensors have been printed, following the method of the invention.
Figure 9 shows an epoxy resins composite part manufactured using the glass-fiber fabric of Figure 8.

### DESCRIPTION OF A WAY OF CARRYING OUT THE INVENTION

Next, different embodiments for obtaining different composites having embedded functionalities (also referred to as composite parts having embedded functionalities) are disclosed. In particular, polymer composites are obtained, that is to say, composites whose matrix is made of polymeric resin. The polymeric resin is reinforced with fiber fabrics, such as non-conductive fabric layers, for example glass fiber fabrics, aramid fiber fabrics and natural fiber fabrics, or a combination of conductive fabric layers (such as carbon fabric layers) and non-conductive fabric layers. The polymer composites obtained by the method of the present invention are therefore fiber reinforced composites. In the context of the present invention, a woven fiber reinforced composite is a material in which fibers (such as glass, carbon, aramid or natural fibers), woven forming a fabric, reinforce a plastic matrix. For example, a glass-fiber reinforced composite is a material in which glass fibers, woven forming a fabric, reinforce a plastic matrix. And a carbon-fiber reinforced composite is a material in which carbon fibers, woven forming a fabric, reinforce a plastic matrix. A carbon-fiber reinforced composite may include a small number of other fabrics (small in comparison with the number of carbon-fiber fabrics), such as a one glass-fiber fabric. The composite may also be hybrid, meaning that it comprises fabric layers of different materials in rather similar amount. The matrix (i.e plastic matrix) of the composite may be a thermoset polymer matrix -most often based on a thermosetting polymer such as epoxy, polyester, vinylester, phenolic resins, etc.-; or a thermoplastic polymer matrix, for example based on polyamide.

A composite having an embedded functionality is obtained as follows: First, a non-conductive fiber fabric, preferably woven, is provided. Then, a printing paste, also referred to as functional paste, is selected. The printing paste may be a conductive paste, such as a paste comprising Ag, Cu and/or Al; a sensing paste, such us a carbon-based paste, a polymeric paste and a magnetite-based paste; a dielectric paste or an adhesive paste. The selection of the paste to be used will be based on the type of element to be printed or applied. For example, when a conductive track needs to be printed, a conductive paste may be used; when a sensor needs to be printed, a sensing paste, such as a carbon-based paste, a polymeric paste or a magnetite-based paste, may be used. When a component, such as a LED or connector, needs to be bonded, an adhesive paste may be used. A dielectric paste may be used to protect printings made of a carbon-based paste (i.e. to prevent the resin of the composite from seeping through the carbon-based paste and eventually modifying it). The printing paste is then applied on the dry non-conductive-fiber fabric, in such a way that a conductive path, optionally including one or more sensors, -plus any other element connected thereto- is obtained, integrated within (printed in) the dry non-conductive fiber fabric. The printing paste is preferably deposited on -or applied to- the non-conductive-fiber fabric following a screen-printing method or a micro-dispensing method. Optionally, at least one electronic component can be attached (e.g. bonded) on the conductive path. The non-conductive-fiber woven fabric including the integrated conductive path and optional sensors and components is stacked with one or more other layers (or cores) forming a laminate. Finally, the laminate is embedded in polymer (matrix). Embedding the non-conductive-fiber fabric in polymer may be done in different ways, as will be disclosed later in different embodiments of the invention.

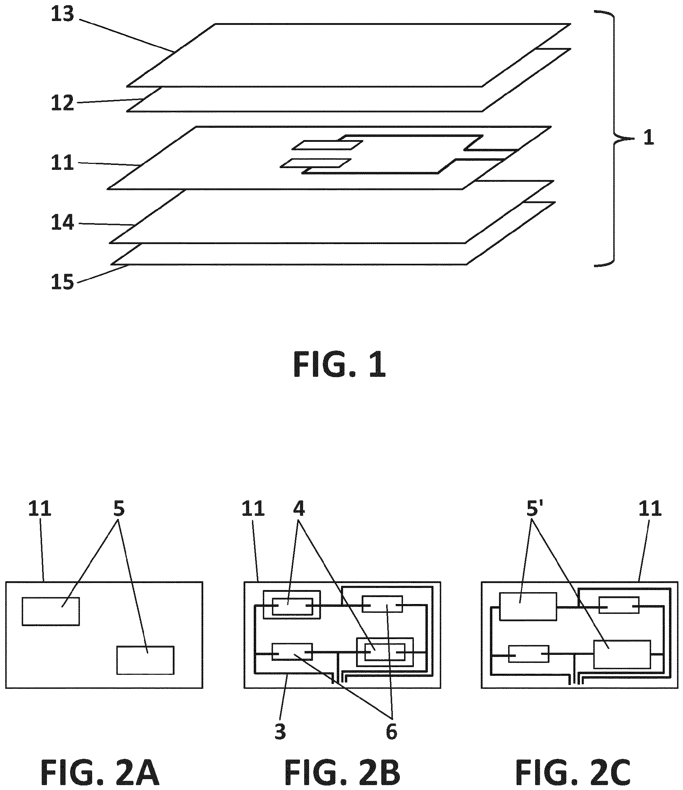

Figure 1 schematically shows a stack of fiber fabrics (or a stack of fiber-fabric layers) 1 for manufacturing a fiber reinforced composite according to an embodiment of the invention. In particular, figure 1 shows a dry printed layer 11 disposed between non-printed layers 12-15, forming a stack. The printed layer 11 is a dry non-conductive fiber woven fabric layer, such as a glass-fiber fabric layer. It may also be a fiber fabric layer made of aramid, natural fiber, polypropylene, polyester, polyamide, among others. Layer 11 has a printed functionality. Surrounding the printed non-conductive-fiber fabric layer 11, there may be a plurality of additional dry fiber fabric layers (12-15 in figure 1), which may be glass-fiber fabric layers, carbon-fiber fabric layers or other fabric layers. Alternatively, there may be at least one prepreg fabric.

The dry non-conductive-fiber layer on which a printed functionality is to be applied (layer 11 in Figure 1) is made of fiber yarns. Fiber yarns are formed by combining extremely fine filaments in strands. In embodiments of the invention, the number of filaments in a yarn can be between 50 - 1650 filaments. The diameter of each filament may be between 4 - 24 µm. The fibers (yarns) may be covered with a covering, also called finish.

The non-conductive-fiber woven fabric 11 must be dry in order to guarantee correct printing thereon. For a correct printing, the paste must fix to the substrate (in this case, fiber fabric), which may only be achieved if the substrate is dry. If the substrate was impregnated, for example with resin, the flow of resin would drag the applied paste.

Among the different parameters defining a fiber fabric 11, such as yarn weight, thread count, weave pattern and fabric finish, regarding the application of a printing, it has been observed that the weave pattern is a very relevant parameter, because it defines the fabric stability and how flat the fabric is. Non-limiting examples of weave patterns of a non-conductive fiber fabric are plain weave, satin weave and twill weave. Stability of a non-conductive fiber fabric depends on the weave pattern. A plain weave pattern is more stable than a satin weave pattern or a twill weave pattern. The dry fiber fabric 11 may have a nominal weight below 1500 g/m².

In embodiments of the invention, a dry fiber fabric 11 having a plain weave is selected. Fiber fabrics having plain weave pattern are more stable and flat than fiber fabrics having other weave patterns, in particular when their nominal weight is below 200 g/m², such as between 25 and 200 g/m². For example, a glass-fiber fabric having plain weave may be selected. For printing a functionality, a paste having viscosity below 600 Pa-s measured with a rheometer at a temperature of 25°C and 1/s shear rate, may be used. For example, a paste having viscosity between 0.01 and 600 Pa-s may be used, such as between 0.1 and 600 Pa-s, or between 1 and 600 Pa-s, or between 10 and 600 Pa-s. When a fiber fabric having plain weave pattern, preferably having nominal weight below 200 g/m², and a paste having viscosity below 600 Pa-s, are used, conductive tracks having a minimum width of 300 µm may be obtained. In embodiments of the invention, the dry fiber fabric 11 has a thickness of at least 20 µm, such as at least 40 µm or at least 80 µm.

In embodiments of the invention, a dry fiber fabric 11 having a weave pattern different from a plain weave pattern is selected, such as a satin weave pattern or a twill weave pattern. In this case, the nominal weight of the glass-fiber fabric is preferably larger than 200 g/m², such as between 200 and 1500 g/m², for example between 200 and 800 g/m². For printing a functionality, a paste having viscosity below 600 Pa-s may be used, such as between 0.01 and 600 Pa-s, or between 0.1 and 600 Pa-s, or between 1 and 600 Pa-s, or between 10 and 600 Pa-s. When a fiber fabric having a non-plain weave pattern, such as satin or twill weave pattern, preferably having nominal weight larger than 200 g/m² (such as between 200 and 1500 g/m², for example between 200 and 800 g/m²), and a paste having viscosity below 600 Pa-s, are used, conductive tracks having a minimum width of 1 mm may be obtained.

The substrate (dry non-conductive woven fiber fabric) should be soaked with the printed paste, in such a way that the fibers become impregnated with paste (such as conductive paste). This is especially important in fabrics having high nominal weight. This means that, for woven fiber fabrics, such as glass-fiber fabrics, having low nominal weight, conductive paths may be achieved even with pastes with poor capacity to soak the fibers (i.e. with pastes having high viscosity), in such a way that a conductive paste is substantially deposited on the surface of the fabric.

The lower the viscosity of the printing paste, the better is the fabric-paste union, because part of the paste impregnates the fibers of the fabric -in addition to creating a paste layer on the fabric. The impregnation of paste is also referred to as wettability. The higher the viscosity of a printing paste, the less it impregnates the fibers (and the paste, such as conductive paste, is deposited on the fabric). Under these circumstances, fabrics having poor stability, such as those having a satin or a twill weave pattern, tend to provoke cracks in the deposited paste layer. Therefore, for woven fabrics having a weave pattern of relatively poor stability, such as a satin weave pattern or a twill weave pattern, the viscosity of the printing paste becomes a key parameter. Therefore, especially for woven fabrics having a satin weave pattern or a twill weave pattern, a paste having viscosity below 100 Pa-s is preferably used, such as between 0.01 and 100 Pa-s, or between 0.1 and 100 Pa-s, or between 1 and 100 Pa-s, or between 10 and 100 Pa-s.

A composite of optimized quality is obtained when a woven fabric 11, such as a glass-fiber fabric, having a plain weave pattern and having nominal weight below 200 g/m² is used, and a printing paste having viscosity below 100 Pa-s is used.

The wettability of the paste is especially relevant when the composite parts to be manufactured are 3D parts, because if the printing paste does not impregnate the fibers of which the printed fiber fabric is made, but remains on the surface of the fabric, when the fabric is curved (for achieving the desired 3D shape) the paste tends to detach from the fabric. Therefore, for manufacturing 3D composite parts, a printing paste having viscosity below 200 Pa-s is preferably used; more preferably a printing paste having viscosity below 100 Pa-s is used.

As a matter of example, Figures 2A-2C schematically show a dry non-conductive fiber fabric 11 on which different pastes have been applied, forming a printed functionality. In particular, the example printed functionality is a temperature sensor. First, as shown in Figure 2A, a dielectric paste 5 is applied on fabric 11. Dielectric paste is necessary when a carbon paste is going to be used, since carbon pastes need to be properly isolated by a sandwiched dielectric paste. Then, as shown in Figure 2B, a carbon paste 4 is printed on the dielectric paste 5. Also, conductive tracks 3 made of conductive paste, such as silver paste, are printed on fabric 11; and polymeric paste 6 is applied on fabric 11. The order of application of the carbon paste 4, the conductive paste for making conductive tracks 3 and the polymeric paste 6 is irrelevant. Finally, as shown in Figure 2C, another layer or portion of dielectric paste 5' is applied on the carbon paste 4 in such a way that, together with the dielectric paste 5 shown in Figure 2A, the carbon paste 4 becomes encapsulated (sandwiched). The portion of dielectric paste 5 disposed closest to the fabric 11 may be applied on the surface of fabric 11 on which the other pastes (carbon paste 4, conductive paste 3, polymeric paste 6) are to be applied, or on the opposite surface of fabric 11, provided the carbon paste 4 becomes fully sandwiched between dielectric pastes 5, 5'. The two portions 5, 5' of dielectric paste are preferably applied on the same surface of fabric 11, that is to say, on the surface on which the other pastes are going to be printed.

A conductive paste (also referred to as conductive ink) is used to print a conductive track or path 3 on the fiber fabric 11. A correct conductivity of the conductive paths printed on the fiber fabric 11 depends on the nominal weight of the fiber fabric, on the viscosity and amount of conductive particles of the conductive paste and on the type of printing method (screen-printing or micro-dispensing). Good conductivity is achieved when the nominal weight of the dry fiber woven fabric 11 is between 25 and 1500 g/m². In particular, when dry fiber fabric 11 has a plain weave, good conductivity is achieved at least when its nominal weight is between 25 and 200 g/m² and a conductive paste having viscosity below 600 Pa-s is used. When dry fiber fabric 11 has a weave pattern different from a plain weave pattern, such as a satin weave pattern or a twill weave pattern, good conductivity is achieved at least when its nominal weight is between 200 and 1500 g/m² and a conductive paste having viscosity below 600 Pa-s is used.

The conductive paste comprises metallic particles, a binder and an organic solvent. The selected conductive paste has an amount of metallic particles (solid particles) of 60 - 85 wt % (weight-%). The amount (weight-%) of binder, organic solvent and other optional eventual additives in the conductive paste is suitably completed. The amount of metallic particles must be in the mentioned range in order to guarantee good conductivity of the conductive path printed on the fiber fabric 11. The metallic particles have an average size in the range of 400 nm to 2 µm. In embodiments in which the metallic particles are substantially spherical, the average size refers to the average diameter of the particles. The metallic particles may be made of silver, copper, aluminum or other metals, or a combination thereof, such as a combination of silver and copper. Any suitable binder, such as a solvent-organic binder, and any suitable organic solvent, may be used.

The minimum width of the conductive paths printed on the glass-fiber fabric may be of around 300 µm. Typical maximum widths may be of several millimeters or even centimeters, depending on the requirements of the specific application of the composite part. The thickness of the printed conductive path deposited on the surface of the fiber fabric 11 may be between 10 - 300 µm. As already explained, depending mainly on weave of the fiber fabric and on the viscosity of the paste, the paste manages to impregnate the fabric to a larger or smaller extent. However, even when the paste manages to impregnate a fabric to a large extent, a layer of paste is deposited on the fabric, this layer having a minimum thickness of about 10 µm. This minimum thickness is obtained, for example, when a paste having viscosity lower than 100 Pa-s is used. On the contrary, for example when a fiber fabric having plain weave and low nominal weight (such as 25 - 200gr/m²) is used, and a paste having viscosity varying between about 400 - 600 Pa-s is applied, a deposited layer of paste of about 300 µm may be achieved. The obtained printed conductive paths do not disturb the flow of resin during a later stage of resin infiltration or application of prepreg.

Regarding the application of the printing paste on the dry non-conductive-fiber fabric 11, when a screen-printing method is used, a squeegee and a screen mesh with the desired pattern are used. The screen mesh is disposed on the substrate (fiber fabric), such that the surface of the mesh substantially corresponds to the surface of the fiber fabric. The screen mesh has pores, such as micro-pores. First, the functional paste is deposited on the screen mesh surface. Next, the squeegee is pressed on the screen and forces the paste into the pores (i.e. micro-pores) of the screen contacting the substrate, and the paste is deposited on the substrate. In embodiments of the invention, a screen mesh from around 21 to 165 th/cm (threads / centimeter), more preferably from 70 to 140 th/cm, may be used to deposit the functional pastes. More than one screen print passes may be made to deposit a higher amount of printing paste on the substrate, thus obtaining a more homogeneous print.

In turn, when a micro-dispensing method is used, a robot or robotic system may be used for printing different types of functional pastes using different dispensing tips (also referred to as needles or dispensing nozzles), through which the functional paste is applied. An important parameter to be taken into account in the selection of the nozzle is its inner diameter because, together with the viscosity of the paste and the pressure to be applied thereto, it conditions the pattern (width and/or depth) of the path (i.e. conductive path) to be applied on the dry fiber fabric 11. Non-limiting examples of internal diameters that the dispensing tip (nozzle) may have are 0.1 mm, 0.15 mm, 0.20 mm, 0.25 mm, 0.33 mm, 0.41 mm, 0.51 mm, 0.61 mm, 0.84 mm, 1.2 mm, 1.36 mm, 1.54 mm, 2.2 mm, 2.7 mm, 3.4 mm and 3.8 mm. The internal diameter of the tip may be selected according to at least the dimensions of the paste path to be traced on the fabric 11. In embodiments of the invention, the width of the printed line (conductive path) is at least several microns larger than the inner diameter of the selected nozzle. For this reason, preferably, the inner diameter of the nozzle is selected to substantially correspond to the width of the conductive path to be printed. The inner diameter of the nozzle is preferably selected to be as close as possible to the width of the conductive path to be printed, provided the inner diameter of the nozzle is equal to or smaller than the width of the conductive path to be printed. The dispensing tips are preferably selected to have inner diameters between 0.41- 1.6 mm. In particular, for conductive path widths within the range of 0.41 and 0.8 mm, a nozzle having an inner diameter within the range of 0.41 and 0.61 mm is preferably selected; and for conductive path widths within the range of 0.8 and 2 mm, a nozzle having an inner diameter within the range of 0.84 and 1.6 mm is preferably selected. Depending on the inner diameter of the nozzle and on the viscosity of the selected paste, a higher or lower pressure must be applied in order to correctly apply the printing.

Once a layer of conductive paste 3 is applied on the fiber fabric 11, and the conductive path is therefore printed, the applied conductive paste is cured following for example a thermal process or a UV process, such that volatile material in the binder medium is driven off. The binder, such as organic binder (e.g. resin) is at least partially left to bind together the conductive particles, thus forming the electrically conducting lines. This may be done in different ways. In a possible embodiment, the printed dry fiber fabric 11 is introduced in an oven at a temperature of 100°C-170°C for certain time, such as between 20 and 90 minutes. In another embodiment, in which a robotic system is used, the conductive paste applied on the fabric 11 is cured using a lamp, such as an IR lamp or a UV lamp. For example, but not limiting, a 200 W lamp having up to 90 W/cm² may be used for a certain time, such as between 30 s and 5 minutes. Good wetting and adhesion of the conductive pattern (path) to the fiber fabric 11 is necessary, especially when non-flat (3D) composites are being manufactured. Good adhesion implies sufficient impregnation of conductive paste in the fibers of the fabric 11. A conductive paste with bad wettability can be unbonded from the fiber fabric 11 during the composite fabrication in a 3D mold. In particular, it has been observed that conductive paths deposited on the fabric -rather than impregnating the fibers- tend to crack when the fabric is manipulated. For this reason, when a conductive paste having relatively high viscosity (i.e. above 400 Pa-s), and therefore which hardly soaks the fibers, is used, a fiber fabric having plain weave (flat, stable fabric) is preferably employed.

Conductive paste 3 may be used to print, in addition to conductive paths or tracks, capacity buttons (such as touch buttons) on specific points of the conductive paths. Capacity buttons are preferably printed using a screen-printing method. In embodiments of the invention, a screen mesh from around 61 to 165 th/cm, more preferably from 77 to 140 th/cm, may be used to deposit the functional paste. More than one screen print passes may be made to deposit a higher amount of printing paste on the substrate (dry fiber fabric), thus obtaining a more homogeneous print. Capacity buttons may have a thickness of around 25 to 300 µm. In a particular example, their thickness is of around 50 µm. The applied capacity buttons are cured following a thermal process. In a possible embodiment, they are cured in an oven at a temperature of 100°C-170°C for certain time, such as between 20 and 90 minutes.

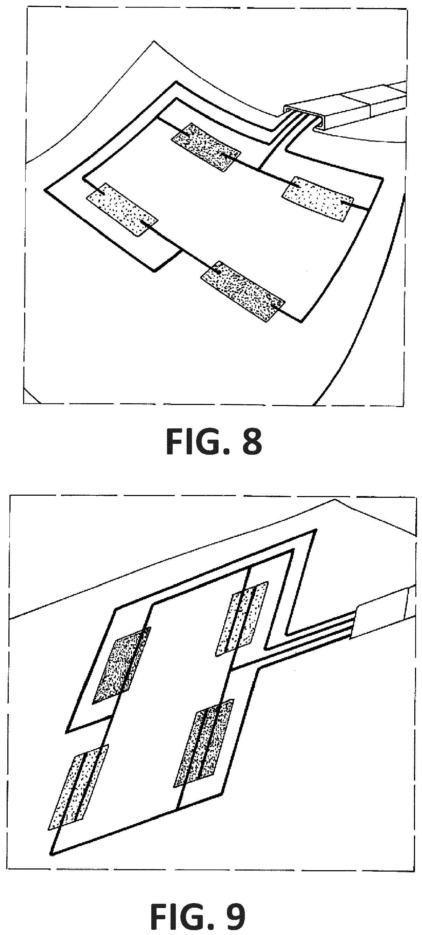

In addition to conductive tracks and optional capacitive buttons (when required), sensing elements may also be printed on the dry fiber fabric 11. Sensing elements may be printed with a sensing paste, such as a carbon-based paste, a polymeric paste or a magnetite-based paste. An example of carbon-based paste and polymeric paste printed on a dry fiber fabric 11 is illustrated in Figure 8 (the two darker rectangles are made of carbon-based paste and the two lighter rectangles are made of polymeric paste). The sensing paste must be in contact with the conductive paste in order to capture an electrical signal. Sensing elements detect events or changes in its environment and send the captured information to other electronics or displaying devices. Sensing elements can be printed on the dry glass fabric 11 and embedded to construct functional composites. For instance, temperature sensors detect changes in the environmental temperature. Electrical properties (for instance the resistivity) of some functional pastes, such as carbon-based pastes or polymeric pastes having a conductive polymer, are affected by the temperature. Therefore, they are sensitive to temperature and can be used to build sensing elements. In order to print sensing elements, different sensing pastes may be used, such as carbon-based pastes, polymeric pastes and magnetite-based pastes.

Carbon-based pastes may be used to print sensing elements in the circuit (for instance temperature or strain sensors), as shown for example in Figure 2B with reference 4. They can also be used as piezo-resistive pastes for, together with other techniques, such as ultrasound detection, detecting failure or delamination in composite parts. The carbon-based paste comprises a carbonaceous material, a binder and a solvent. The carbonaceous material is preferably one of the following materials: graphite, graphene and carbon nanotubes. Any suitable binder may be used, such as a solvent-organic binder. The binder may be a solvent-organic polymer. Any suitable solvent may be used, such as water. The carbon-based paste preferably comprises an amount of carbonaceous material (i.e. carbonaceous particles) of 30 - 55% (%weight solid content). For example, a carbon-based paste having an amount of solid material of 30-34% may be used. Or a carbon-based paste having an amount of solid material of 54-55% may be used. The particles may be made of graphite, graphene or carbon nanotubes, or a combination thereof. Sensing elements made of carbon-based pastes are preferably printed using a screen-printing method. In embodiments of the invention, a screen mesh from around 21 to 120 th/cm may be used to deposit the carbon-based paste. More than one screen print passes may be made to deposit a higher amount of printing paste on the substrate (glass-fiber fabric), thus obtaining a more homogeneous print. The applied carbon-based paste is preferably cured after each screen print pass. The applied carbon-based paste is cured, for example following a thermal process or a UV process. In a possible embodiment, it is cured after each screen print pass at a temperature between room temperature and 130°C for certain time, such as 15 minutes.

Because the resistivity value of the carbon-based paste 4 printed on the fiber fabric 11 may change during the infusion and curing of the resin in the later fabrication of the composite fabrication, the applied carbon-based paste 4 is preferably insulated with an encapsulation 5, 5'. Encapsulation 5, 5' may be an encapsulating paste or a polymer film, such as a polyurethane film. In a particular embodiment, the carbon-based paste 4 is surrounded by an encapsulating paste 5, 5' acting as dielectric material. Thus, during the manufacturing of the composite part, the polymer (i.e. resin) of which the plastic matrix is made, does not modify the resistance value of the carbon-based paste when the polymer (i.e. resin) penetrates within the fiber fabrics. Therefore, a dielectric paste must be applied on the carbon-based tracks or paths. Preferably, the dielectric paste is also applied at the other side (surface) of the carbon-based paste 4, forming a dielectric path that substantially overlaps the carbon-based paste. The applied dielectric paste is cured, for example following a thermal process or a UV process. The two paths (portions) of dielectric paste 5, 5' prevent the carbon-based paste 4 from being modified when the resin is injected (or in general, when the resin penetrates within the fiber fabrics). Thus, the carbon-based paste 4 is sandwiched between two dielectric portions/paths/layers 5, 5'. It is noted that complete layers of dielectric, such as dielectric films, for example a polyurethane film, deposited on the surface of the fiber fabric 11, are less preferred, in order to interfere as little as possible with the flow of resin during the manufacture of the composite part. The dielectric paste is preferably a polymeric dielectric paste.

The selected polymeric dielectric paste is preferably a 100% solid paste after curing. Non-limiting examples of polymeric dielectric materials that may be used as dielectric paste are: poly (4-vinylphenol) (PVP), poly (methyl methacrylate), Polyethylene Terephthalate, polyimide, Polyvinyl alcohol, Polystyrene, poly(vinyl pyrollidone), poly(vinyl chloride) and polyamides. When encapsulating paste (dielectric paste) is used as encapsulation 5, 5', it is preferably deposited using a screen-printing method. When a polymer film is used as encapsulation, it is bonded to the fabric 11 by means of thermal pressing at a certain temperature, such as around 120 °C, for some seconds.

Polymeric pastes comprising conductive polymers may also be used to print sensing elements in the circuit (for instance temperature sensors), as shown for example in Figure 2B with reference 6. Polymeric pastes comprise organic polymers that conduct electricity and a solvent. The solvent may be water. Non-limiting examples of organic polymers that may be comprised in the polymeric paste, are: poly(3,4-ethylenedioxythiophene) (PEDOT), poly (p-phenylene sulfide) (PPS) and a combination of both. For example, a polymeric paste having between 0.01 - 5% (weight-%) of solid content (organic polymer) and between 95 - 99.99% of water may be used. Sensing elements made of polymeric pastes are preferably printed using a screen-printing method. In embodiments of the invention, a screen mesh from around 77 to 180 th/cm, preferably from 130 to 150 th/cm, may be used to deposit the polymeric paste. Sensors made of polymeric paste may have a thickness of around 25 to 80 µm. In a particular example, their thickness is of around 40 µm. The applied polymeric paste is cured following for example a thermal process or a UV process. In a possible embodiment, they are cured in an air convection oven at a temperature of 80 - 200°C for certain time, such as between 10 and 30 minutes.

The sensing paste may also be a magnetite-based paste. For example, a paste comprising magnetite, a binder and a solvent, may be used. Other components may be also comprised in the magnetite-based paste. For example, a paste may be used having at least 45% of magnetite (weight-%), 15 - 35 wt % (weight-%) of water, 5 - 15 wt % (weight-%) of estyrene-acrylate copolymer and <4% (weight-%) of glycerol.

In addition to the conductive track 3 made of conductive paste printed on the dry fiber fabric 11, and to the eventual sensing elements 4, 6 and encapsulation 5, 5', other components, such as LEDs, connectors, or others, may be bonded to the circuit using an adhesive, for example an isotropic conductive adhesive or an anisotropic conductive film adhesive. Anisotropic conductive film adhesives may be made of a thermoplastic or a thermoset adhesive randomly loaded with conductive particles. Isotropic conductive adhesives are preferably used. The adhesive may be applied to the component using a micro-dispensing process. The component is then bonded to the circuit. The bonded component and bonding adhesive are preferably cured.

The printing order of the different tracks (conductive paths, sensors, buttons, etc.) may be altered.

So far, the stages of printing a functionality, generally referred to as a circuit, such as an electronic assembly, on the dry non-conductive fiber fabric 11, have been explained. Once the functionality has been printed on the dry fiber fabric, the printed dry fabric 11 may be stacked with other fiber fabrics. Depending on the flexibility/rigidity and thickness of the composite part to be manufactured, the printed dry fabric 11 may be the only fiber fabric reinforcing the resin matrix. In this case, the printed dry fabric 11 is not stacked with other fiber fabrics. However, there is typically at least one other fabric forming a stack with the printed fabric. When several fiber fabrics are stacked one on another, one of the stacked fiber fabrics is the printed fabric 11. No adhesive or any other bonding means is used. The amount of fiber fabrics comprised in the stack may depend on the desired thickness and structural properties targeted of the composite part to be manufactured. Usually, at least two fiber fabrics are stacked, one of them being the printed one. In embodiments of the invention, there may be up to 20 fabrics, such as up to 15 fabrics, or up to 10 fabrics. This may depend on the nominal weight and permeability of the fabrics, on the dimensions of the composite part to be manufacture and on the applied process to manufacture the composite part.

The one or more fabrics or fabric layers which are stacked with the printed dry fabric 11, forming a stack or laminate, may be dry fabrics (either woven or non-woven fabrics), prepreg fabrics or a combination of dry and prepreg fabrics. A prepreg is a fabric impregnated with resin. Non-limiting examples of dry fabrics are glass, carbon, aramid or natural fiber fabrics. In embodiments of the invention, the stack comprises only glass-fiber fabrics. In this case, the composite to be manufactured will be a glass-fiber reinforced composite. In embodiments of the invention, the stack comprises fabrics of a different type of fiber, such as aramid fabrics, natural fiber fabrics, carbon-fiber fabrics or other fabrics. In embodiments of the invention, the stack comprises different fiber fabrics, such as of glass-fiber fabrics, aramid fabrics, natural fiber fabrics, carbon-fiber fabrics and/or other fabrics. In this case, the composite to be manufacture is in general considered a hybrid-fiber reinforced composite. The stack formed by the printed fabric 11 and at least one additional fabric (dry fabric or prepreg fabric) may be preformed. In addition to the dry fabrics and/or prepreg fabrics, stacked with the printed fabric 11, the stack of laminate may also comprise foam cores or honeycomb cores, such as polypropylene, aluminum, aramid, etc. Alternatively, the printed dry fiber fabric may be stacked with one or more cores, such as foam cores or honeycomb cores. In other words, the laminate formed by a stack of fabrics can be a monolithic part or part of a sandwich composite (foam core, honeycomb core, etc.).

When the stack comprises only glass-fiber fabrics, the printed fiber fabric, such as glass-fiber fabric, may be any fabric of the stack. In other words, it may be the top one, the bottom one, or anyone in between. Preferably, the printed fabric has at least one fabric on top. When the printed fabric includes components, such as LEDs, the printed fabric has preferably only one fabric on top. When the stack comprises conductive-fiber fabrics (such as carbon-fiber fabrics) and non-conductive-fiber fabrics (such as aramid fiber fabrics), the printed fabric is preferably separated from the closest conductive fiber fabric (i.e. carbon-fiber fabric) with at least two non-conductive-fiber fabrics, in order to electrically isolate the printed fabric from the conductive-fabric layer. This applies both on top of the printed fabric and beneath the printed fabric. In other words, there are at least two non-conductive-fiber fabrics between the printed fabric and a conductive fiber fabric (such as a carbon-fiber fabric). Also preferably, the printed fabric has at least one fabric on top, which should be a non-conductive-fiber fabric when there are only one or two top layers.

The laminate formed by the stack of fabrics including the printed dry fiber fabric 11 (or, in a particular embodiment, the printed dry fiber fabric 11 without any other stacked fabric), may be formed manually (hand layup) or automatically (Automated Tape Layer (ATL), Automatic Fiber Placement (AFP), etc.). The laminate is used to reinforce a resin matrix (plastic or polymeric resin matrix) in order to manufacture a structural composite (composite part). The plastic matrix may be a thermoset polymer matrix -most often based on a thermosetting polymer such as epoxy, polyester, vinylester, phenolic resins, etc.-; or a thermoplastic polymer matrix, for example based on polyamide. In other words, for completing the composite, a thermoset composite matrix may be introduced following conventional techniques, such as as prepreg (in which case the stack or laminate needs at least one prepreg layer), as a resin film or by infiltration of liquid resins based on different methods (Resin Transfer Moulding, infusion). Alternatively, a thermoplastic matrix may be introduced within the stack of fabrics following a process of in-situ polymerization of the monomer. Thus, the stack of fiber fabrics is embedded in polymeric resin in order to manufacture the composite. The resin may be provided following different conventional polymerization techniques, such as:
- In liquid form, for example using techniques like vacuum infusion or resin transfer moulding (RTM) for thermosets or by in-situ polymerization of thermoplastic monomers. For example, polyamide (PA) composites can be obtained (directly polymerizing in a 3D mould or obtaining the composite in planar moulds);
- Using preimpregnated fibre (prepreg), in which a fiber fabric is impregnated with resin, such as phenolic or epoxy resins; as already described, in this case the prepreg already is included in the laminate, but not yet cured; or
- As a resin film.

When a mould is used, the mould may be flat or curved. Therefore, 2D or 3D composite parts can be obtained. Resins or monomers having viscosities below 200 Pa-s have been tested and offer excellent results. Next, some of these conventional techniques are disclosed more deeply. Nevertheless, one skilled in the art will understand that any other conventional processes of obtaining a polymer composite may be followed, or any step of a conventional process may be altered within the well-established expertise of the skilled person.

In a particular embodiment, an in-situ polymerization process is followed. In particular, an in-situ polymerization process of a thermoplastic monomer (such as a lactams) is used to obtain polyamide composites. Therefore, in this case the resin may be polyamide. The polymerization is performed directly in a mould. First, the mould is heated. When it reaches certain temperature, such as about 165 °C, the stack of fiber fabrics (including the printed one), which may be preformed. A monomer, such as caprolactam, and a catalyst component are injected in the mold for several seconds, and the polymerization is performed. The composite part is then demoulded. A detailed disclosure of this process is for example given in US9290622-B2. After demoulding, a thermoforming process may be performed.

In another particular embodiment, a technique of infusion (infiltration) is followed. The resin may be an epoxy resin. First, the stack of fiber fabrics (including the printed one) is laid up in a mould. A vacuum bag is then prepared. It is then compressed. The applied vacuum may be for example of 0.75 - 1 bar at between 60 - 250 °C for several seconds or minutes. A resin (such as epoxy) is then injected at room temperature into the compressed vacuum bag. The assembly is then cured, for example in a heater or in an oven, wherein polymerization takes place. The composite part is then demoulded.

In another particular embodiment, fiber preimpregnated with resin (also referred to as prepreg) is used. The resin may be a phenolic resin or an epoxy resin. In this process, the reinforcement fiber fabric has been pre-impregnated with a resin matrix in a certain ratio. When this technique is used, the printed dry fabric may be for example sandwiched between two prepregs, or deposited on or beneath one prepreg. One or more dry fabrics may optionally be added (stacked). Preferably, the stack formed by the printed fabric and at least one prepreg is compacted in order to remove air, for example using a roller. Then a vacuum bag is created. The applied vacuum may be of 0.75 - 1 bar. The assembly is cured, for example in a heater, to allow the flow of resin to impregnate the fiber fabrics. For example, between 45 min and 2 hours at a temperature of 90 - 150°C. The composite part is then demoulded.

### EXAMPLES

### Example 1: Embedded conductive paths in thermoplastic polyamide (PA) composite

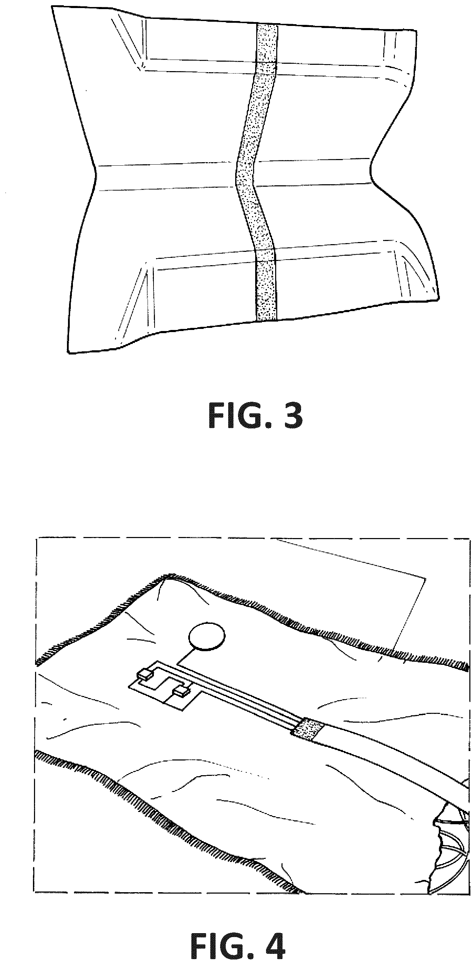

A thermoplastic PA composite having embedded conductive paths is shown in Figure 3. It has been manufactured as follows. A glass-fiber fabric with nominal weight of 600 g/m² has been printed by screen-printing (using a screen printing mesh of 77 th/cm) with an Ag/Cu conductive paste having 75% of solid content (Ag/Cu particles) and viscosity of 400 Pa-s. Several print passes (from one to four passes) have been performed to homogenize the printed path. The Ag/Cu conductive paste is cured in an oven at 130 °C for 30 min. A thermoplastic composite processing technique based on the process disclosed in US9290622-B2, has been used. A stack made of the printed glass-fiber fabric and three additional layers of glass-fiber fabrics is placed on a mould heated at 165 °C, in which a caprolactam monomer and a catalysis system are injected. The low viscosity of the casting facilitates the infiltration of the monomer in the fabric. After the in-situ polymerization of the polyamide (PA), the sample is demolded. Afterwards, a thermoforming process is performed. The sample is heated in an IR oven at 250 °C for 15 s. Later, the sample is thermoconformed for 20 s at 40 bar and 100 °C. The result is shown in Figure 3.

### Example 2: Embedded LEDs and touch sensors in epoxy resins composite

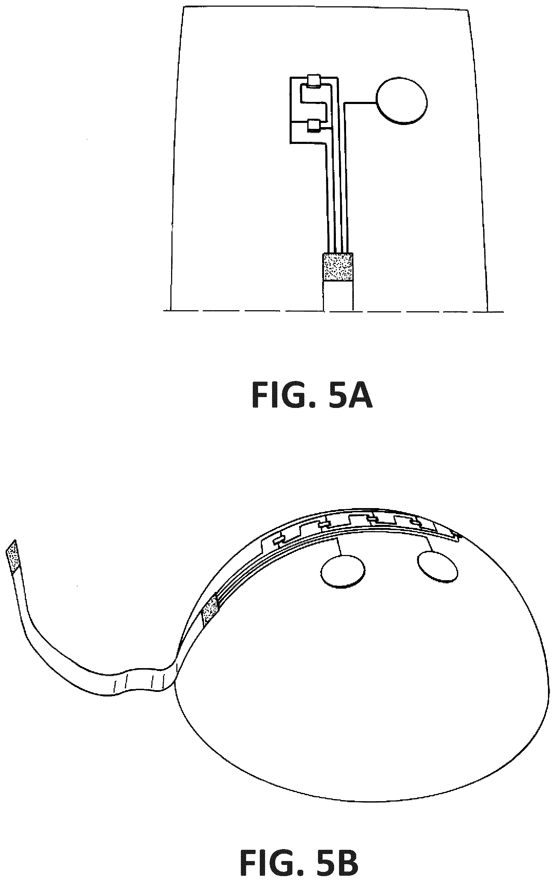

Two epoxy resins composites having embedded LEDs and touch sensor are shown in Figures 5A and 5B. They have been manufactured as follows. Glass-fiber fabrics having nominal weights of around 105 - 200 g/m² have been used. Conductive paths have been printed on one of the glass-fiber fabrics by micro-dispensing using silver or silver/copper conductive paste, having 80% solid content and viscosity of 400 Pa-s. A dispensing tip of 0.61 mm of inner diameter has been used. A pressure of around 0.4 - 1 bar has been applied. The conductive paste is cured in an oven at 120-130 °C for 30 min. Once the conductive tracks have been printed on the glass-fiber fabric, capacitive touch sensors are printed using a screen printing method (with a screen printing mesh of 70-140 th/cm) using silver conductive paste. One to four screen print passes are made to deposit more paste quantity on the substrate and to get a more homogeneous print. The printed touch buttons have a thickness in the range of 40 to 80 µm. The conductive paste is cured in an oven at 120-130 °C for 30 min. Connectors have been bonded with isotropic conductive adhesives using a micro-dispensing method (with tips having inner diameter of 0.41 mm and applied pressure of around 0.4 - 1 bar). Other rigid components (LEDs) are positioned and bonded with a pick&place robot. The printed glass-fiber fabric is shown in Figure 4. Then, the printed fabric is stacked with several fabrics of glass-fiber. A composite part is fabricated through an infusion process. The stack of glass-fiber fabrics (one of which having been printed and with the rigid components bonded) is infused with Epoxy resin using a flat mould (Figure 5A) in vacuum conditions (0.75-1 bar). In Figure 5A, the stack is formed by seven additional layers of glass-fiber. A stuck of glass-fiber fabrics (one of which having been printed and with the rigid components bonded) is infused with Epoxy resin using a curved mould (Figure 5B) in vacuum conditions (0.75-1 bar). In Figure 5B, the stack is formed by ten additional layers of glass-fiber. The samples are cured in an oven at 90 °C for 1.5 hours.

### Example 3: Embedded conductive paths in preimpregnated phenolic composite

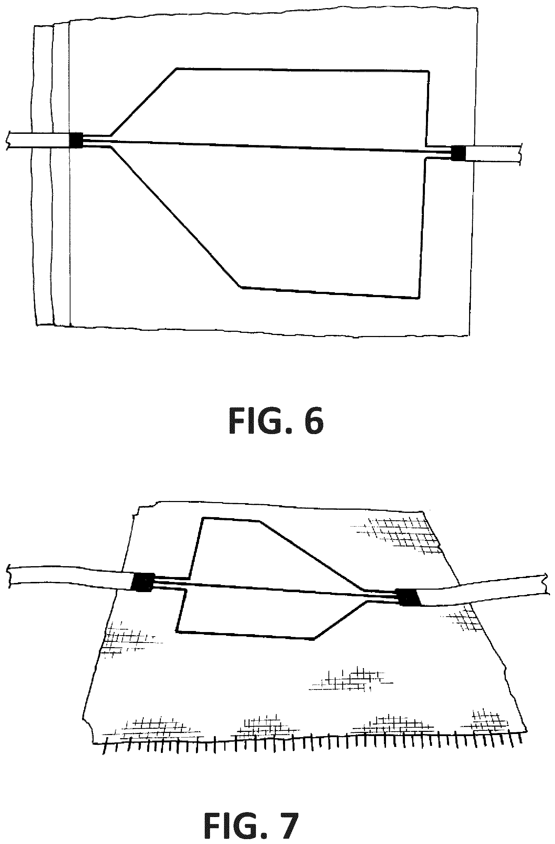

A preimpregnated phenolic composite having embedded conductive paths is shown in Figure 6. It has been manufactured as follows. A conductive path has been printed on a glass-fiber fabric having nominal weight of 300 g/m² by screen-printing (using screen printing mesh of 70 th/cm) with an Ag conductive paste having 66% of solid content and viscosity of 80 Pa-s. Several print passes have been performed to homogenize the printed path, from one to four passes. The conductive paste is cured at 130 °C for 30 min. A laminate comprising the printed fabric and a prepreg commercialized by Gurit is prepared. Prepreg is PHG840-300-42 (woven fabric of E-glass filament yarn, 300 g/m², 8H satin, preimpregnated with 42% phenolic resin PH840). The laminate is placed in an infusion bag (vacuum of about 0.75-1 bar) in an oven at 120 for 1 h. The result is shown in Figure 6.

### Example 4: Embedded conductive paths in a hybrid aramid/carbon fiber composite using epoxy resin

A hybrid aramid/carbon fiber composite having embedded conductive paths is shown in Figure 7. It has been manufactured as follows. Conductive tracks have been printed in an aramid fabric having nominal weight of 170 g/m², using an Ag conductive paste having 60% of solid content and viscosity of 130 Pa-s. The printed fabric has been stacked together with other aramid-fiber fabrics having nominal weight of 170 g/m² and with carbon-fiber fabrics having nominal weight of 277 g/m². A screen-printing technique has been used, using a screen printing mesh of 70 - 140 th/cm. The conductive tracks have been cured in an oven at 130 °C for 30 min. The quasi-isotropic laminate is hybrid, formed with aramid and carbon fiber fabrics. The laminate is infused with Epoxy resin and cured at room temperature for 24 h. The result is shown in Figure 7.

### Example 5: Embedded temperature sensors in epoxy resins composite

An epoxy resin composite having embedded temperature sensors is shown in Figure 9. It has been manufactured as follows. Glass-fiber fabrics having nominal weight of 105-200 g/m² have been used. On one of the glass-fiber fabrics, sensing layers made of carbon-based paste and conductive polymer paste were deposited by screen-printing (using a screen printing mesh of 70-140 th/cm) and then cured. The sensing paste is a carbon-based paste having 35% of solid content and viscosity of 78 Pa-s. The conductive polymer paste is a combination of poly(3,4-ethylenedioxythiophene) (PEDOT), poly (p-phenylene sulfide) (PPS) and water. It has less than 5% of solid content and more than 95% water. Its viscosity is between 30-50 Pa-s. The carbon-based sensing layers (sensors) were encapsulated with polyurethane dielectric film. Conductive metallic tracks were then printed using a silver conductive paste having 66% of solid content and viscosity 80 Pa-s, using a microdispensing method, in which dispensing tips of inner diameter of 0.61 mm and applied pressure of around 0.4 - 1 bar were used. The printed conductive paste is cured in an oven at 120-130 °C for 30 min. A connector is bonded with an isotropic conductive adhesive using a microdispensing method (using a dispensing tips of inner diameter of 0.41 mm and applied pressure of around 0.4 - 1 bar). The printed fabric is shown in Figure 8 (the two darker rectangles are made of carbon-based paste and the two lighter rectangles are made of polymeric paste). A stuck of glass-fiber fabrics, one of which has been printed and has rigid components bonded thereon, is formed. A composite is then fabricated through an infusion process. The stuck of glass-fiber fabrics is infused with Epoxy resin. The sample is cured in an oven at 90 °C for 1.5 hours. The resulting composite part is shown in Figure 9.

In summary, the proposed method allows obtaining composite parts having printed (such as micro-dispensed or screen-printed) electric conductive structures, including sensing elements and/or other components, embedded within the composite part. The composite parts may be 2D or 3D. Conductive paths, stress/strain and temperature sensors and other elements have been printed on a dry non-conductive fiber woven fabric which can be non-intrusively embedded in a composite following standard manufacturing processes. It has been proved that printed conductive paths do not disturb the flow of resin when later infiltrating or doing the prepreg.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method of manufacturing a polymer composite having an embedded functionality, the method comprising:
providing a dry non-conductive fiber fabric (11) having a nominal weight from 25 - 600 g/m2;
selecting a paste having viscosity below 600 Pa-s, the paste being a conductive paste, a dielectric paste and/or a sensing paste;
applying the selected paste on the dry non-conductive fiber fabric (11) by means of either screen-printing or micro-dispensing, thus making a printed functionality;
forming a laminate comprising the dry non-conductive fiber fabric (11) having the printed functionality and at least one additional fabric or core;
obtaining a polymer composite from said laminate.

2. The method of claim 1, wherein the dry non-conductive fiber layer (11) is made of fiber yarns, each fiber yarn comprising between 50 and 1650 filaments, the diameter each filament being between 4 and 24 µm.

3. The method of any one of claims 1-2, wherein the dry non-conductive fiber fabric (11) is woven.

4. The method of claim 3, wherein the dry non-conductive fiber fabric (11) is woven defining a plain weave pattern and has a nominal weight below 200 g/m².

5. The method of claim 3, wherein the dry non-conductive fiber fabric (11) is woven defining a satin or twill weave pattern and has a nominal weight above 200 g/m².

6. The method of claim 5, wherein the viscosity of the paste is below 100 Pa-s.

7. The method of any one of claims 1-6, wherein the paste is a conductive paste comprising:
metallic particles, a binder and an organic solvent; the amount of metallic particles being between 60 to 85 wt%, the metallic particles having an average size between 400 nm to 2 µm.

8. The method of any one of claims 1-6, wherein the paste is a sensing paste, the sensing paste being one of the following: a carbon-based paste, a polymeric paste having a conductive polymer or a magnetite-based paste.

9. The method of claim 8, wherein when a carbon-based paste is selected, further comprising printing a dielectric paste on the carbon-based paste.

10. The method of any one of claims 1-9, further comprising, after applying the selected paste on the dry non-conductive fiber fabric (11), curing the printed functionality following a thermal or UV process.

11. The method of any one of claims 1-10, further comprising attaching at least one electronic component on the dry non-conductive fiber fabric (11).

12. The method of any one of claims 1-11, wherein the dry non-conductive fiber fabric (11) is a glass-fiber fabric.

13. The method of any one of claims 1-12, wherein the laminate is a stack of dry fiber fabrics comprising the printed dry non-conductive fiber fabric (11).

14. The method of any one of claims 1-13, wherein the stage of obtaining a polymer composite from said laminate is done following an in-situ polymerization process or an infiltration process.

15. The method of any one of claims 1-12, wherein the laminate is a stack formed by the printed dry non-conductive fiber fabric (11) plus at least one prepreg, wherein the stage of obtaining a polymer composite from said laminate is done by applying vacuum to the stack and curing.

## Patentansprüche

1. Verfahren zur Herstellung eines Polymerverbundstoffs, der eine eingebettete Funktionalität aufweist, das Verfahren umfassend:
Bereitstellen eines trockenen, nicht leitfähigen Fasergewebes (11) mit einem Nenngewicht von 25-600 g/m²;
Auswählen einer Paste, die eine Viskosität von weniger als 600 Pa-s aufweist, wobei die Paste eine leitende Paste, eine dielektrische Paste und/oder eine sensorische Paste ist;
Auftragen der ausgewählten Paste auf das trockene, nicht leitende Fasergewebe (11) entweder durch Siebdruck oder Mikrodosierung, wodurch eine gedruckte Funktionalität entsteht;
Bilden eines Laminats, das das trockene nichtleitende Fasergewebe (11), das die gedruckte Funktionalität aufweist, und mindestens ein zusätzliches Gewebe oder einen zusätzlichen Kern umfasst;
Erhalten eines Polymerverbundstoffs aus diesem Laminat.

2. Verfahren nach Anspruch 1, wobei die trockene nichtleitende Faserschicht (11) aus Fasergarnen besteht, wobei jedes Fasergarn zwischen 50 und 1650 Filamente umfasst, wobei der Durchmesser jedes Filaments zwischen 4 und 24 µm liegt.

3. Verfahren nach einem der Ansprüche 1-2, wobei der trockene, nicht leitende Faserstoff (11) gewebt ist.

4. Verfahren nach Anspruch 3, wobei das trockene, nicht leitfähige Fasergewebe (11) in Leinwandbindung gewebt ist und ein Nenngewicht von unter 200 g/m² aufweist.

5. Verfahren nach Anspruch 3, wobei das trockene, nicht leitfähige Fasergewebe (11) in Satin- oder Köperbindung gewebt ist und ein Nenngewicht von über 200 g/m² aufweist.

6. Verfahren nach Anspruch 5, wobei die Viskosität der Paste unter 100 Pa-s liegt.

7. Verfahren nach einem der Ansprüche 1-6, wobei die Paste eine leitfähige Paste ist, die metallische Partikel, ein Bindemittel und ein organisches Lösungsmittel umfasst; wobei die Menge an Metallpartikeln zwischen 60 und 85 Gew.-% liegt und die Metallpartikel eine durchschnittliche Größe zwischen 400 nm und 2 µm aufweisen.

8. Verfahren nach einem der Ansprüche 1-6, wobei die Paste eine Sensorpaste ist, wobei die Sensorpaste eine der folgenden ist: eine Paste auf Kohlenstoffbasis, eine Polymerpaste mit einem leitfähigen Polymer oder eine Paste auf Magnetitbasis.

9. Verfahren nach Anspruch 8, wobei die Auswahl einer Paste auf Kohlenstoffbasis ferner das Drucken einer dielektrischen Paste auf die Paste auf Kohlenstoffbasis umfasst.

10. Verfahren nach einem der Ansprüche 1-9, ferner umfassend, nach dem Auftragen der ausgewählten Paste auf das trockene, nicht leitende Fasergewebe (11), das Aushärten der gedruckten Funktionalität nach einem thermischen oder UV-Prozess.

11. Verfahren nach einem der Ansprüche 1-10, das ferner die Befestigung von mindestens einer elektronischen Komponente auf dem trockenen, nicht leitenden Fasergewebe (11) umfasst.

12. Verfahren nach einem der Ansprüche 1-11, wobei das trockene, nichtleitende Fasergewebe (11) ein Glasfasergewebe ist.

13. Verfahren nach einem der Ansprüche 1-12, wobei das Laminat ein Stapel trockener Faserstoffe ist, der den bedruckten trockenen nichtleitenden Faserstoff (11) umfasst.

14. Verfahren nach einem der Ansprüche 1-13, wobei die Stufe der Gewinnung eines Polymerverbundstoffs aus dem Laminat nach einem In-situ-Polymerisationsprozess oder einem Infiltrationsprozess erfolgt.

15. Verfahren nach einem der Ansprüche 1-12, wobei das Laminat ein Stapel ist, der aus dem bedruckten, trockenen, nicht-leitenden Fasergewebe (11) und mindestens einem Vorverbundmaterial gebildet wird, wobei der Schritt, einen Polymerverbundstoff aus dem Laminat zu erhalten, durch Anlegen von Vakuum an den Stapel und Aushärten erfolgt.

## Revendications

1. Procédé de fabrication d'un composite polymère ayant une fonctionnalité intégrée, le procédé comprenant les étapes consistant à :
fournir un tissu de fibres non conducteur sec (11) ayant un poids nominal de 25 - 600 g/m² ;
sélectionner une pâte ayant une viscosité inférieure à 600 Pa-s, la pâte étant une pâte conductrice, une pâte diélectrique et/ou une pâte de détection ;
appliquer la pâte sélectionnée sur le tissu de fibres non conducteur sec (11) au moyen soit d'une impression au cadre soit d'un microdosage, réalisant ainsi une fonctionnalité imprimée ;
former un stratifié comprenant le tissu de fibres non conducteur sec (11) ayant la fonctionnalité imprimée et au moins un tissu ou une âme supplémentaire ;
obtenir un composite polymère à partir de ce stratifié.

2. Procédé selon la revendication 1, dans lequel la couche de fibres non conductrice sèche (11) est constituée de fils de fibres, chaque fil de fibres comprenant entre 50 et 1 650 filaments, le diamètre de chaque filament étant compris entre 4 et 24 µm.

3. Procédé selon l'une des revendications 1 à 2, dans lequel le tissu de fibres non conducteur sec (11) est tissé.

4. Procédé selon la revendication 3, dans lequel le tissu de fibres non conducteur sec (11) est tissé en définissant un motif de toile et a un poids nominal inférieur à 200 g/m².

5. Procédé selon la revendication 3, dans lequel le tissu de fibres non conducteur sec (11) est tissé en définissant un motif de satin ou de serge et a un poids nominal supérieur à 200 g/m².

6. Procédé selon la revendication 5, dans lequel la viscosité de la pâte est inférieure à 100 Pa-s.

7. Procédé selon l'une quelconque des revendications 1 à 6, dans lequel la pâte est une pâte conductrice comprenant : des particules métalliques, un liant et un solvant organique ; la quantité de particules métalliques étant comprise entre 60 et 85 % en poids, les particules métalliques ayant une taille moyenne comprise entre 400 nm et 2 µm.

8. Procédé selon l'une quelconque des revendications 1 à 6, dans lequel la pâte est une pâte de détection, la pâte de détection étant l'une des suivantes : une pâte à base de carbone, une pâte polymère contenant un polymère conducteur ou une pâte à base de magnétite.

9. Procédé selon la revendication 8, dans lequel, lorsqu'une pâte à base de carbone est sélectionnée, on imprime en outre une pâte diélectrique sur la pâte à base de carbone.

10. Procédé selon l'une quelconque des revendications 1 à 9, comprenant en outre, après l'application de la pâte sélectionnée sur le tissu de fibres non conducteur sec (11), l'étape consistant à faire durcir la fonctionnalité imprimée par un processus thermique ou UV.

11. Procédé selon l'une quelconque des revendications 1 à 10, comprenant en outre l'étape consistant à attacher au moins un composant électronique sur le tissu de fibres non conducteur sec (11).

12. Procédé selon l'une quelconque des revendications 1 à 11, dans lequel le tissu de fibres non conducteur sec (11) est un tissu de fibres de verre.

13. Procédé selon l'une quelconque des revendications 1 à 12, dans lequel le stratifié est un empilement de tissus de fibres secs comprenant le tissu de fibres non conducteur sec imprimé (11).

14. Procédé selon l'une quelconque des revendications 1 à 13, dans lequel l'étape consistant à obtenir un composite polymère à partir dudit stratifié est réalisée à la suite d'un procédé de polymérisation in situ ou d'un procédé d'infiltration.

15. Procédé selon l'une quelconque des revendications 1 à 12, dans lequel le stratifié est un empilement formé par le tissu de fibres non conducteur sec imprimé (11) et au moins un préimprégné, l'étape consistant à obtenir un composite polymère à partir dudit stratifié étant réalisée par application d'un vide à l'empilement et polymérisation.
